# FASCICULE DE BREVET EUROPEEN

(11) **EP 2 552 677 B1**
(45) Date de publication et mention de la délivrance du brevet: **23.03.2016**
(21) Numéro de dépôt: 11711775.4
(22) Date de dépôt: 24.03.2011
(51) Int. Cl.: B29C 70/22, B29C 70/48, B29C 70/54, B29C 70/86, D04C 1/00, F16C 7/00

(54) **PROCEDE DE FABRICATION D'UN BRAS EN MATERIAU COMPOSITE COMPORTANT UN PALIER TRANSVERSAL DESTINE A RECEVOIR UN AXE FIXE OU ROTATIF**
VERFAHREN ZUR HERSTELLUNG EINES ARMS AUS EINEM VERBUNDSTOFF MIT EINEM LÄNGSLAGER FÜR DIE AUFNAHME EINER FIXEN ODER ROTIERENDEN WELLE
METHOD FOR PRODUCING AN ARM MADE FROM COMPOSITE MATERIAL, COMPRISING A TRANSVERSE BEARING INTENDED TO RECEIVE A FIXED OR ROTARY SHAFT

(30) Priorité: 26.03.2010 FR 1052232
(43) Date de publication de la demande: 06.02.2013
(73) Titulaire: Messier-Bugatti-Dowty, 78140 Vélizy-Villacoublay (FR)
(72) Inventeur: MASSON, Richard, F-78350 Les Loges en Josas (FR); DUNLEAVY, Patrick, F-91120 Palaiseau (FR)
(74) Mandataire: Beaudouin-Lafon, Emmanuel
(86) Numéro de dépôt international: PCT/EP2011/001478
(87) Numéro de publication internationale: WO 2011/116966

(56) Documents cités:
- EP-A1- 1 798 428
- EP-A2- 0 283 974
- CH-A5- 652 176
- US-A- 4 992 313
- "Assembly : the best assembly is no assembly required" In: F. C. Campbell: "Manufacturing processes for advanced composites", 2004, ELSEVIER, Oxford, UK, XP002613994, ISBN: 1856174158 pages 439-470, page 440 - page 445

## Description

L'invention concerne un bras constituant un élément de structure d'un atterrisseur d'aéronef, tel qu'un balancier, c'est-à-dire comprenant un corps principal intégrant un palier destiné à recevoir un axe rotatif, ou un axe fixe formant essieu, orienté transversalement par rapport à la direction principale de ce corps principal.

### ARRIERE PLAN DE L'INVENTION

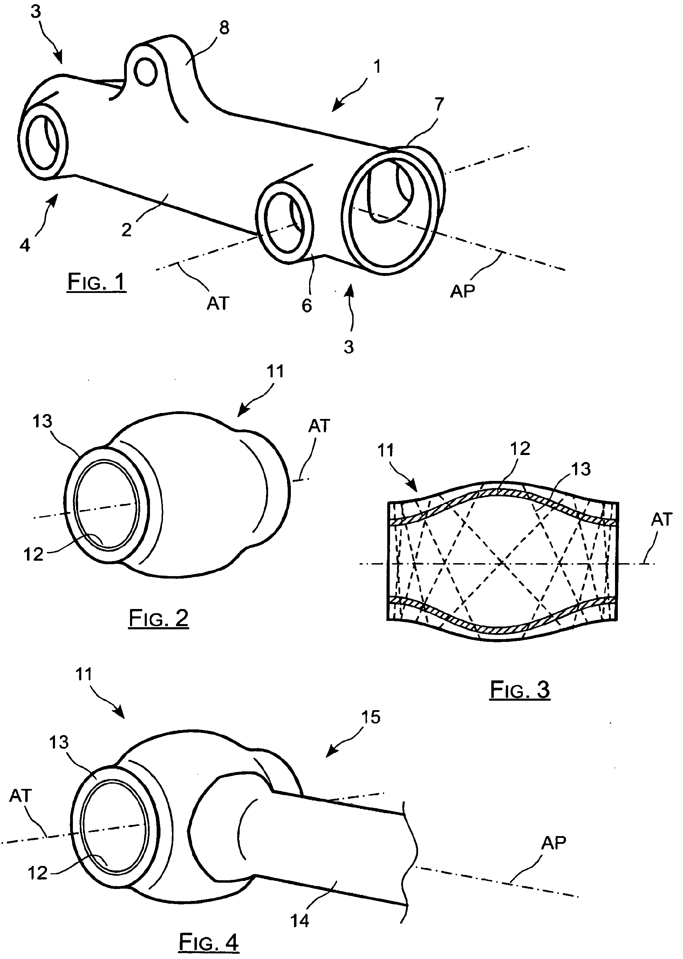

Un balancier d'atterrisseur connu qui est représenté schématiquement en figure 1 en y étant repéré par 1 se présente sous la forme d'une pièce tubulaire ou bras s'étendant selon une direction principale repérée par AP.

Ce bras comprend une portion principale 2 s'étendant entre deux extrémités 3 et 4, et présentant une section circulaire à peu près constante dans sa région centrale.

Comme visible dans la figure 1, l'extrémité avant 3 de ce bras est destinée à recevoir un axe orienté transversalement selon la direction AT qui est ici perpendiculaire à la direction AP. Cette extrémité constitue à cet effet une portion formant interface ou palier formée dans deux bossages dépassant transversalement de la face externe du corps principal 2.

Chaque bossage est percé et alésé selon la direction AT, de manière à former les deux portées du palier pour engager un axe mécanique traversant transversalement le corps principal du bras.

De manière analogue, l'extrémité arrière comprend elle aussi une interface formant palier généralement analogue, et qui est destinée à recevoir un autre axe transversal non représenté. Complémentairement, ce balancier comprend encore une chape intermédiaire 8 située entre ses deux extrémités et dépassant radialement de la face externe du corps principal.

Compte tenu de la forme complexe des paliers d'un tel balancier, visible en figure 1, et de la tenue mécanique importante que l'on en attend, l'ensemble du balancier est généralement fabriqué en acier à haute résistance par usinage.

Les bossages 6 et 7 dans lesquels sont réalisés les paliers sont déterminants en ce qu'ils constituent des surépaisseurs locales de matière, ce qui est indispensable pour assurer que les efforts exercés par l'axe mécanique sur le corps de balancier ne donnent pas lieu à des concentrations de contraintes trop importantes dans le balancier.

Ainsi, d'une manière générale, les éléments de structure du type balancier ou analogue, nécessitent de réaliser des surépaisseurs de matière au niveau de leurs interfaces avec d'autres pièces afin de limiter le phénomène de concentration de contrainte qui est de nature à provoquer des amorces de rupture.

Dans le cas d'un balancier d'atterrisseur comme celui de la figure 1, chaque palier reçoit un axe qui est en fait fixe par rapport au balancier, et qui constitue un essieu portant par exemple deux roues situées de part et d'autre de ce balancier.

Le problème qui se pose est analogue dans le cas d'un bras comprenant un palier recevant un axe rotatif, dans la mesure où la question de la concentration de contraintes au niveau du palier reste déterminante quant au dimensionnement d'un tel bras.

Le document EP 1 798 428 divulgue un procédé de fabrication simultané de plusieurs bras en matériau composite comportant au moins un palier destiné à recevoir un axe fixe ou tournant traversant le bras transversalement.

Ledit document réalise plusieurs bras en déplaçant le mandrin selon l'axe des supports.

### OBJET DE L'INVENTION

Le but de l'invention est de proposer une solution pour fabriquer en matériau composite un bras comportant un palier destiné à recevoir un axe mécanique traversant ce bras transversalement.

### RESUME DE L'INVENTION

A cet effet, l'invention a pour objet un procédé de fabrication d'un bras en matériau composite comportant au moins un palier destiné à recevoir un axe fixe ou tournant traversant le bras transversalement, ce procédé comprenant les étapes de :
- fabriquer au moins un moyeu par bobinage de fibres renforçantes autour d'un support généralement tubulaire ;
- fabriquer au moins un manchon ;
- fabriquer un mandrin en fixant chaque moyeu à au moins une extrémité de manchon de telle manière que chaque moyeu s'étende transversalement à chaque manchon ;
- appliquer une ou plusieurs couches de fibres renforçantes tressées autour de ce mandrin et sur toute sa longueur avec une machine de tressage de fibres renforçantes ;
- injecter et polymériser de la résine dans la ou les couches de fibres tressées et éventuellement dans la ou les fibres bobinées du moyeu pour établir une cohésion liant rigidement au moins les couches de fibres tressées avec le moyeu qu'elles entourent ;
- usiner les couches de fibres renforçantes tressées au niveau de chaque extrémité du support généralement tubulaire afin de dégager chaque extrémité de ce support.

Avec cette solution, le moyeu bobiné permet de constituer une surépaisseur de matière suffisante pour limiter les concentrations de contraintes au niveau des zones d'introduction d'efforts, et d'obtenir une cohésion optimale entre le corps du bras formé par ces couches et le moyeu.

L'invention concerne également un procédé tel que défini ci-dessus, dans lequel chaque manchon est fabriqué avec des pièces de tissu de fibres renforçantes préimprégnées de résine, dans lequel les fibres renforçantes bobinées autour du support généralement tubulaire sont également préimprégnées de résine, et dans lequel le mandrin est prépolymérisé avant application des couches de fibres renforçantes tressées.

L'invention concerne également un procédé tel que défini ci-dessus, dans lequel les fibres renforçantes sont bobinées autour du support généralement tubulaire de manière à constituer un moyeu ayant une forme externe généralement sphérique.

L'invention concerne également un procédé tel que défini ci-dessus, dans lequel le support généralement tubulaire a une plus grande section dans sa portion centrale qu'au niveau de ses extrémités.

L'invention concerne également un procédé tel que défini ci-dessus, dans lequel chaque extrémité de manchon est fixée au moyeu par collage.

L'invention concerne également un procédé tel que défini ci-dessus, dans lequel chaque manchon présente une extrémité ayant une forme évasée pour épouser la forme externe du moyeu auquel cette extrémité est fixée.

L'invention concerne également un procédé tel que défini ci-dessus, dans lequel le moyeu est situé à une extrémité du mandrin.

L'invention concerne également un procédé tel que défini ci-dessus, dans lequel le mandrin est fabriqué en assemblant au moyeu deux manchons s'étendant de part et d'autre du moyeu.

### BREVE DESCRIPTION DES FIGURES

La figure 1 est une vue d'ensemble en perspective d'un balancier connu fabriqué en acier à haute résistance ;
La figure 2 est une vue montrant en perspective un moyeu bobiné conformément à l'invention représenté seul ;
La figure 3 est une vue en coupe du moyeu bobiné selon l'invention représenté seul ;
La figure 4 est une vue en perspective montrant une extrémité du mandrin fabriqué conformément à l'invention ;
La figure 5 est une vue en perspective illustrant schématiquement une machine de tressage ;
La figure 6 est une vue en perspective montrant une extrémité du balancier intégrant un palier en étant fabriqué conformément à l'invention.

### DESCRIPTION DETAILLEE DE L'INVENTION

L'idée à la base de l'invention est de fabriquer un moyeu par bobinage de manière à constituer une surépaisseur de matériau composite au niveau des interfaces de la future pièce, d'assembler chaque moyeu à un manchon pour constituer un mandrin autour duquel sont ensuite appliquées des couches de fibres tressées. Les couches de fibres renforçantes sont ainsi rigidement solidarisées au moyeu après injection et polymérisation de résine dans ces couches et à la jonction de ces couches avec le moyeu.

Le moyeu qui est représenté seul dans la figure 2, en y étant repéré par 11 est fabriqué à partir d'un support généralement tubulaire 12, s'étendant selon un axe noté ici AT, autour duquel sont bobinées des fibres renforçantes.

Ces fibres peuvent se présenter sous forme de torons, sous forme d'une bande de fibres tissées, ou autre, et elles peuvent être imprégnées de résine ou ne pas être imprégnées. Elles sont bobinées autour de la face externe du support 12 de manière à constituer un moyeu ayant une forme externe généralement sphérique au milieu du moyeu.

Ceci peut être obtenu avec un support 12 constitué par une portion de tube de section constante, en bobinant une plus grande quantité de fibres autour de la région centrale de ce tube qu'autour de ses extrémités.

Mais le support 12 généralement tubulaire peut aussi avoir une section évolutive, qui est plus importante dans sa région centrale qu'au niveau de ses extrémités, comme illustré dans la figure 3, dans laquelle le support 12 présente dans sa région centrale une forme externe approximativement sphérique.

Le bobinage des fibres 13 peut alors être optimisé pour présenter une épaisseur plus importante au niveau des extrémités du tube du fait qu'elles sont soumises aux contraintes les plus élevées en fonctionnement, et présenter une épaisseur plus faible dans la région centrale qui est plus faiblement sollicitée du point de vue mécanique.

Comme le montre schématiquement la figure 3, on peut obtenir une épaisseur de fibres qui diffère d'une région à l'autre le long de l'axe AT du tube, en modifiant l'angle de bobinage des fibres 13 au cours de l'opération de bobinage. Ainsi, dans l'exemple de la figure 3, l'angle de bobinage est faible aux extrémités pour constituer une épaisseur importante, et il est important dans la région centrale pour y constituer une épaisseur de fibres plus faible.

Ceci peut être obtenu aussi bien lorsque les fibres se présentent sous forme d'un toron directement bobine, autant que lorsque ces fibres se présentent sous forme d'un ruban tissé ou d'une bande qui est alors bobiné autour du support 12.

Ainsi, et comme visible dans la figure 2, le moyeu 11 constitué par le tube et les fibres renforçantes qui l'entourent, repérées ici par 13, a une forme générale se rapprochant de celle d'une sphère traversée par un trou qui est délimité par la face interne du tube 12.

Ce moyeu correspond au corps du palier ou diffuseur intégré au bras, et il constitue la surépaisseur de matière permettant de limiter l'effet de concentration de contrainte induit par les efforts qui sont exercés sur le bras par l'axe mécanique traversant le palier.

Le tube 12 est par exemple fabriqué avec des fibres renforçantes se présentant sous forme de tissu préimprégné de résine, qui est appliqué sur une pièce cylindrique de manière à constituer la forme de tube. Le tube ainsi constitué est prépolymérisé de manière à lui conférer une rigidité suffisante pour le manipuler et pour bobiner les fibres renforçantes 13.

Comme représenté en figure 4, le moyeu 11 est ensuite fixé à une extrémité d'un manchon 14, de telle manière que le tube 12 du moyeu 11 s'étende transversalement à ce manchon 14, cet assemblage étant réalisé par collage avec de la résine.

Cette opération peut être réalisée avec un autoclave, par exemple en deux parties, délimitant une forme interne correspondant à la forme externe du mandrin. L'opération consiste alors à appliquer dans la région hémicylindrique de l'autoclave des couches de tissu de fibres renforçantes préimprégnées pour constituer le manchon.

Le moyeu 11 est ensuite installé dans l'empreinte correspondante de l'autoclave, de la colle pouvant alors être apposée dans les zones de jonction pour assurer un collage du moyeu 11 à l'extrémité de chaque demi-manchon. On établit applique ensuite un film à la face interne du manchon avant d'établir une dépression pour plaquer la paroi de ce manchon 14 contre les faces correspondantes de l'autoclave.

Un cycle de chauffage est ensuite enclenché, pour pré-polymériser la résine imprégnée dans les couches 13 constitutives du moyeu 11 et dans les couches constituant le manchon 14. Ce cycle de chauffage est ajusté pour assurer une prépolymérisation de le résine qui soit suffisante pour conférer au mandrin 15 formé par le moyeu 11 et le manchon 14, une tenue mécanique suffisante pour le manipuler, en vue notamment d'appliquer à la face externe de ce mandrin plusieurs couches de fibres renforçantes tressées.

Comme visible dans la figure 4, le manchon 14 a une forme généralement tubulaire, mais son extrémité est avantageusement prévue évasée de manière à épouser la forme de la face externe à peu prés sphérique du moyeu 11 dans la région où il est solidarisé à l'extrémité du manchon 14.

D'autres solutions peuvent aussi être mises en oeuvre pour former le mandrin. Par exemple, le manchon 14 et le moyeu 11 peuvent être fabriqués et prépolymérisés séparément, avant de solidariser l'extrémité du manchon 14 au moyeu 11 par collage simple.

Lorsque l'ensemble du mandrin a été fabriqué, on procède avantageusement à un test d'étanchéité de manière à assurer qu'il ne puisse pas être traversé par de la résine injectée autour de ce mandrin, au cours d'une opération ultérieure décrite plus bas.

Une fois que l'ensemble du mandrin 15 est formé et suffisamment rigide, plusieurs couches de fibres renforçantes tressées sont appliquées successivement tout autour de ce mandrin et sur toute sa longueur, au moyen d'une machine à tresser.

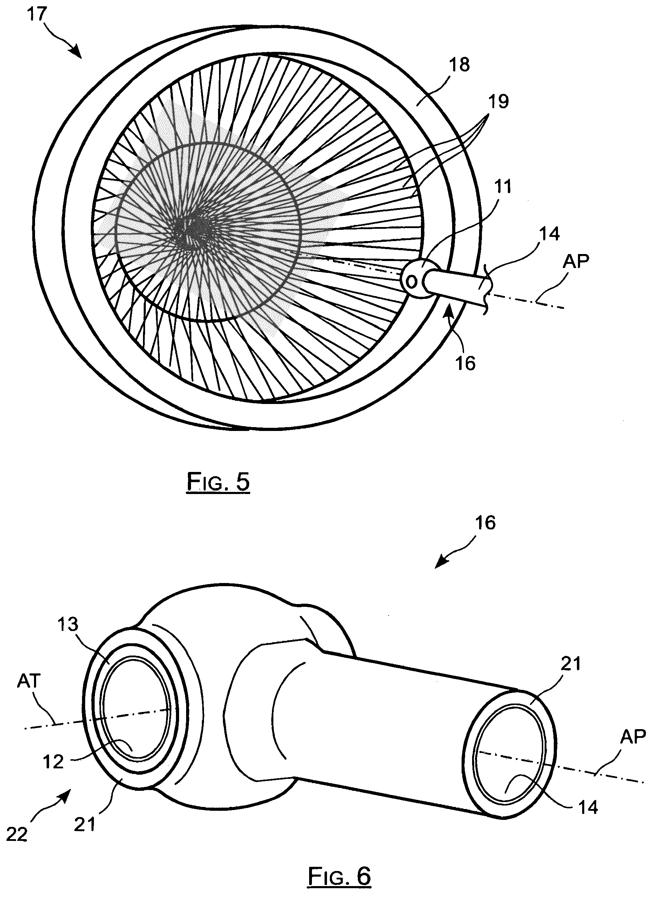

Comme représenté dans la figure 5, le mandrin 15 est alors installé dans la machine à tresser 17 qui comporte essentiellement un anneau 18 portant à sa face arrière une série de bobines de fibre telles que des fibres de carbone, portées par des supports mobiles rotatifs par rapport à l'anneau. Ces fibres 19 se rejoignent dans une région appelée point de tressage qui est située sensiblement sur l'axe AP tout en étant décalée le long de cet axe par rapport au plan de l'anneau support 18.

Dans l'exemple de la figure 5, l'anneau porteur 18 est centré sur l'axe AP, et s'étend selon un plan normal à cet axe. Lorsque le cycle de tressage est lancé, le mandrin 15 est déplacé le long de l'axe AP par rapport à l'anneau porteur 18, ce qui provoque le tressage d'une chaussette de fibres à la face externe du mandrin 14.

Plusieurs passages sont ainsi réalisés pour constituer plusieurs couches de fibres tressées entourant le mandrin 15 sur toute sa longueur, c'est-à-dire autour du manchon 14 et autour du moyeu, chaque couche ayant une épaisseur sensiblement constante.

Une fois que les différentes couches de fibres tressées ont été appliquées, la pièce ainsi constituée, qui comporte donc le mandrin entouré par les différentes couches de fibres, est placée dans un moule tel qu'un moule en deux parties symétriques l'une de l'autre par rapport à un plan de joint. Chaque partie comprend alors une portion hémicylindrique correspondant à une moitié du manchon, et se terminant par une empreinte dans laquelle se loge une moitié du moyeu 11.

La résine est alors injectée de manière à imprégner complètement les différentes couches de fibres tressées et éventuellement les fibres bobinées du moyeu, jusqu'à atteindre les faces externes du support 12 et du manchon 14, de manière à assurer la meilleure cohésion possible entre le mandrin et ces couches, en particulier au niveau du moyeu. On obtient ainsi une transmission optimale des efforts appliqués au moyeu 11, vers les couches périphériques de fibres tressées constituant le corps du bras.

L'étanchéité du mandrin mentionnée plus haut assure que la résine injectée ne peut pas pénétrer à l'intérieur du manchon qui est prévu creux afin d'optimiser la masse de l'ensemble. Cette étanchéité étant assurée par le support tubulaire 12 et par le manchon 14, les extrémités du manchon ayant avantageusement été bouchées avant assemblage avec le moyeu 11.

Après injection de la résine, le moule est piloté pour provoquer un cycle de cuisson qui assure d'une part la cuisson complète des couches de matériau composite tressées 21 entourant le mandrin, et qui termine par ailleurs la cuisson des éléments constitutifs du mandrin, c'est-à-dire le manchon et le moyeu.

Lorsque la cuisson est terminée, le moyeu ainsi que les couches de fibres renforçantes tressées avec la résine qui lie l'ensemble constituent la structure principale du bras ou balancier. La pièce brute ainsi obtenue est ensuite usinée de manière à donner au palier sa forme définitive, comme illustré en figure 6.

Ces usinages consistent essentiellement en deux opérations de fraisage selon des plans normaux à l'axe transversal AT, au niveau du moyeu. Ces opérations de fraisage consistent ainsi à retirer les couches de fibres renforçantes dans les régions situées en vis-à-vis de chaque extrémité du tube 12, pour que ces extrémités ne soient plus obturées. Complémentairement, les extrémités de la bielle sont également usinées.

L'intérieur du tube 12 peut également être alésé pour lui conférer un diamètre interne précis correspondant à une côte tolérancée prédéfinie. Une fois que l'alésage du diamètre interne du tube 11 a été réalisé, une ou plusieurs bagues métalliques peuvent être implantées à l'intérieur de ce tube de manière à recevoir l'axe mécanique traversant ce palier.

Il est à noter que dans l'exemple des figures, le palier est situé au niveau d'une extrémité du bras, mais l'invention permet également de réaliser de manière analogue un bras ou un élément de structure ayant un palier situé par exemple dans sa région centrale.

Dans ce cas, on prévoit par exemple deux manchons qui sont rapportés de part et d'autre du moyeu en étant rigidement solidarisés à celui-ci de façon à constituer le mandrin. Les deux manchons peuvent être positionnés de manière à former un angle l'un par rapport à l'autre, de sorte que le bras a alors une forme coudée, le palier étant situé dans la zone coudée en s'étendant transversalement par rapport à chaque manchon.

Le cas échéant, un ou deux autres moyeux peuvent complémentairement être fixés aux extrémités libres de ces deux manchons de manière à constituer un élément structurel pouvant comporter deux ou trois paliers.

## Revendications

1. Procédé de fabrication d'un bras en matériau composite comportant au moins un palier destiné à recevoir un axe fixe ou tournant traversant le bras transversalement, ce procédé comprenant les étapes de :
- fabriquer au moins un moyeu (11) par bobinage de fibres renforçantes (13) autour d'un support généralement tubulaire (12) ;
- fabriquer au moins un manchon (14) ;
- fabriquer un mandrin (15) en fixant chaque moyeu à au moins une extrémité de manchon de telle manière que chaque moyeu s'étende transversalement à chaque manchon ;
- appliquer une ou plusieurs couches de fibres renforçantes sous forme de chaussettes tressées autour de ce mandrin et sur toute sa longueur avec une machine de tressage (17) de fibres renforçantes comportant un anneau (18) porteur de bobines de fibres renforçantes, et en déplaçant ce mandrin le long d'un axe (AP) normal à cet anneau ;
- injecter et polymériser de la résine dans la ou les couches de fibres tressées et éventuellement dans la ou les fibres bobinées du moyeu pour établir une cohésion liant rigidement au moins les couches de fibres tressées avec le moyeu qu'elles entourent ;
- usiner les couches de fibres renforçantes tressées au niveau de chaque extrémité du support généralement tubulaire afin de dégager chaque extrémité de ce support.

2. Procédé selon la revendication 1, dans lequel chaque manchon (14) est fabriqué avec des pièces de tissu de fibres renforçantes préimprégnées de résine, dans lequel les fibres renforçantes (13) bobinées autour du support généralement tubulaire (12) sont également préimprégnées de résine, et dans lequel le mandrin (15) est prépolymérisé avant application des couches de fibres renforçantes tressées (21).

3. Procédé selon la revendication 1 ou 2, dans lequel les fibres renforçantes sont bobinées autour du support généralement tubulaire (12) de manière à constituer un moyeu ayant une forme externe généralement sphérique.

4. Procédé selon l'une des revendications 1 à 3, dans lequel le support généralement tubulaire (12) a une plus grande section dans sa portion centrale qu'au niveau de ses extrémités.

5. Procédé selon l'une des revendications précédentes, dans lequel chaque extrémité de manchon (14) est fixée au moyeu (11) par collage.

6. Procédé selon l'une des revendications précédentes, dans lequel chaque manchon présente une extrémité ayant une forme évasée pour épouser la forme externe du moyeu (11) auquel cette extrémité est fixée.

7. Procédé selon l'une des revendications précédentes, dans lequel le moyeu (11) est situé à une extrémité du mandrin (15).

8. Procédé selon l'une des revendications précédentes, dans lequel le mandrin est fabriqué en assemblant au moyeu (11) deux manchons s'étendant de part et d'autre du moyeu (11).

## Patentansprüche

1. Verfahren zum Herstellen eines Arms aus einem Verbundwerkstoff, wobei der Arm mindestens ein Lager umfasst, das dazu bestimmt ist, eine feststehende oder umlaufende Achse aufzunehmen, die den Arm transversal durchsetzt, wobei dieses Verfahren die Schritte umfasst:
- Herstellen mindestens einer Nabe (11) durch Wickeln von verstärkenden Fasern (13) um einen im Allgemeinen rohrförmigen Träger (12);
- Herstellen mindesten einer Hülse (14);
- Herstellen eines Dorns (15), indem jede Nabe an mindestens einem Hülsenende derart befestigt wird, dass sich jede Nabe quer zu jeder Hülse erstreckt;
- Aufbringen einer oder mehrerer Schichten aus verstärkenden Fasern in Form von Strümpfen, die um diesen Dorn herum und über dessen gesamte Länge mit einer Flechtmaschine (17) zum Flechten von verstärkenden Fasern geflochten werden, wobei die Flechtmaschine einen Ring (18) umfasst, der Spulen mit verstärkenden Fasern trägt, und während dieser Dorn entlang einer senkrecht zu diesem Ring verlaufenden Achse (AP) verschoben wird;
- Einspritzen und Polymerisieren von Harz in der bzw. den Schichten aus geflochtenen Fasern und möglicherweise in der bzw. den gewickelten Fasern der Nabe, um eine Kohäsion herzustellen, die zumindest die Schichten aus geflochtenen Fasern starr mit der Nabe, die sie umgeben, verbindet;
- Bearbeiten der geflochtenen Schichten aus verstärkenden Fasern im Bereich jedes Endes des im Allgemeinen rohrförmigen Trägers, um jedes Ende von diesem Träger zu lösen.

2. Verfahren nach Anspruch 1, wobei jede Hülse (14) mit Gewebestücken aus verstärkenden Fasern hergestellt wird, die mit Harz vorimprägniert werden, wobei die um den im Allgemeinen rohrförmigen Träger (12) gewickelten verstärkenden Fasern (13) ebenfalls mit Harz vorimprägniert werden, und wobei der Dorn (15) vor dem Aufbringen der geflochtenen Schichten (21) aus verstärkenden Fasern vorpolymerisiert wird.

3. Verfahren nach Anspruch 1 oder 2, wobei die verstärkenden Fasern derart um den im Allgemeinen rohrförmigen Träger (12) gewickelt werden, dass sie eine Nabe bilden, die eine im Allgemeinen kugelförmige Außenform hat.

4. Verfahren nach einem der Ansprüche 1 bis 3, wobei der im Allgemeinen rohrförmige Träger (12) in seinem zentralen Abschnitt einen größeren Querschnitt als im Bereich seiner Enden hat.

5. Verfahren nach einem der vorhergehenden Ansprüche, wobei jedes Hülsenende (14) an der Nabe (11) durch Kleben befestigt wird.

6. Verfahren nach einem der vorhergehenden Ansprüche, wobei jede Hülse ein Ende aufweist, das eine aufgeweitete Form hat, um sich der Außenform der Nabe (11), an der dieses Ende befestigt wird, anzupassen.

7. Verfahren nach einem der vorhergehenden Ansprüche, wobei sich die Nabe (11) an einem Ende des Dorns (15) befindet.

8. Verfahren nach einem der vorhergehenden Ansprüche, wobei der Dorn dadurch hergestellt wird, dass an der Nabe (11) zwei Hülsen angebracht werden, die sich zu beiden Seiten der Nabe (11) erstrecken.

## Claims

1. Method for manufacturing an arm (16) in composite material comprising at least one bearing (22) designed to receive a fixed or rotating shaft passing through the arm (16) transversely, this method comprising the steps of:
- manufacturing at least one hub (11) by winding reinforcing fibres (13) around a generally tubular support (12);
- manufacturing at least one sleeve (14);
- manufacturing a mandrel (15) by attaching each hub (11) to at least one sleeve end so that each hub (11) extends transversely to each sleeve (14);
- applying one or more reinforcing fibres in the form of a boot braided around this mandrel and over its whole length with a machine (17) for braiding reinforcing fibres comprising a supporting ring (18) for supporting reinforcing fibre windings and by moving this mandrel along an axis (AP) perpendicular to this ring ;
- injecting and polymerizing resin into the layer or layers of braided fibres (21) and optionally into the wound fibre or fibres of the hub (11) in order to establish a cohesion rigidly binding at least the layers of braided fibres (21) with the hub (11) that they surround;
- machining the layers of braided reinforcing fibres (21) at each end of the generally tubular support (12) in order to clear each end of this support (12).

2. Method according to Claim 1, in which each sleeve (14) is manufactured with pieces of fabric of reinforcing fibres preimpregnated with resin, in which the reinforcing fibres (13) wound around the generally tubular support (12) are also preimpregnated with resin, and in which the mandrel (15) is prepolymerized before application of the layers of braided reinforcing fibres (21).

3. Method according to Claim 1 or 2, in which the reinforcing fibres are wound around the generally tubular support (12) so as to form a hub having a generally spherical outer shape.

4. Method according to one of Claims 1 to 3, in which the generally tubular support (12) has a larger section in its central portion than at its ends.

5. Method according to one of the preceding claims, in which each sleeve end (14) is attached to the hub (11) by bonding.

6. Method according to one of the preceding claims, in which each sleeve has an end having a flared shape in order to closely follow the outer shape of the hub (11) to which this end is attached.

7. Method according to one of the preceding claims, in which the hub (11) is situated at one end of the mandrel (15).

8. Method according to one of the preceding claims, in which the mandrel is manufactured by assembling to the hub (11) two sleeves extending on either side of the hub (11).
